# EUROPEAN PATENT APPLICATION

(11) **EP 1 162 466 A1**
(43) Date of publication of application: **12.12.2001**
(21) Application number: 00304781.8
(22) Date of filing: 06.06.2000
(51) Int. Cl.: G01P 13/00, G01C 9/06, G01C 9/20

(54) **Motion sensors**

(71) Applicant: Product Innovation Holdings Limited, Ware, Hertfordshire SG12 9PY (GB)
(72) Inventor: Frank, Peter, London NW2 4DT (GB)
(74) Representative: Burke, Steven David

(57) **Abstract**

A motion sensor device comprises a conductive cap (8) fixed to one layer of a printed circuit board (4) to define a volume half of which is filled with a dielectric liquid (16). A conductive layer on the opposite side of the printed circuit board forms with the cap a capacitor, the capacitance of which is dependent upon the location of the liquid within the cap. A motion signal is generated in response to a change of capacitance from that presented in any static orientation of the device, so long as the capacitance change exceeds a threshold and occurs within a predetermined interval.

## Description

This invention relates to motion sensors.

Numerous motion sensors are known in the art. For example, some arrangements are shown in GB 2151828 A. In particular, figure 6 of that document shows an arrangement similar to one which has been used successfully as a PASS (personal alert safety sensor), and in particular as a sensor for detecting when a fire-fighter becomes motionless. These sensors are carried by fire-fighters, and generate an alarm when the fire-fighter ceases to move, as an indication that he may have become disabled or unconscious. Sensors used for such purposes need to be capable of withstanding wide ranges of temperatures and operating effectively irrespective of their orientation.

Although the sensor mentioned above has been highly effective, it is quite large and has been found to be fairly noisy in use, and to suffer from wear after a few years.

Other prior art arrangements include accelerometers, some of which use the motion of liquid to indicate movement. The liquid may be conductive, or have dielectric or resistive properties, and is contained in a structure so arranged that an electrical property of the structure changes as the liquid moves therein. See for example US 4707927 A. This shows a structure which can be used as an accelerometer or an inclinometer. When the sensor starts to move, or when its orientation changes, a viscous, dielectric fluid moves relative to electrodes, thereby changing the capacitance between a common electrode and respective detecting electrodes. The degree of inclination or acceleration can be determined from the new values of the capacitances. The arrangement requires multiple electrodes presumably to achieve a bridge arrangement and thus reduce calibration and temperature-sensitivity problems. It is, however, noted that the arrangement would not completely avoid these problems, because any output value representing acceleration or inclination will depend upon the difference between measured capicitance values, which will be influenced by temperature and other factors.

The output of this device is dependent upon the relative position of the liquid within the structure, and hence is dependent upon the orientation of the structure. The liquid is made viscous in order to provide a stable output. This means that the sensor would be highly unsuitable for use in a number of fields, including the PASS field mentioned above, which require operation independent of orientation, and also need the sensor to be highly sensitive to movement, which would be precluded by the use of a viscous liquid.

A motion sensor according to the present invention provides an output which depends upon the location of liquid in a container. Preferably, the liquid is dielectric, and the sensor produces a signal which depends upon the capacitance presented by a capacitor which is formed by electrodes on opposite sides of the liquid. However, the liquid could have other properties, for example it could be electrically resistive or conductive, although this is likely to give rise to difficulties caused by electrolysis due to current flow.

In accordance with one aspect of the invention, the sensor provides a movement-indicating signal if a measured property dependent upon the position of the liquid changes by more than a predetermined amount within a predetermined interval. By looking for changes in the property, rather than its absolute magnitude, it is possible to generate the movement-indicating signal irrespective of the initial orientation of the sensor. By requiring that the change occur within a predetermined interval, the sensor can be made insensitive to gradual changes of position or orientation, in addition to drift associated with temperature and/or component value variations. It is found also that a sensor according to the present invention has a significantly shorter settling time than some prior art arrangements.

Preferably, filtering is applied to the sensor output signal so that a movement-indicating signal is produced only in appropriate circumstances. For example, the sensor may be arranged so that the movement-indicating signal is provided only if the measured property changes successively in the same sense a predetermined number of times. This ensures that the signal is generated only in response to genuine movement, rather than a slight disturbance, such as may be caused by vibration. Additionally, or alternatively, the movement-indicating signal is provided only if the measured property changes in opposite senses within a predetermined interval. In practice, in many environments, after the sensor begins to move, it is impossible for the sensor to continue to accelerate in the same direction, or indeed to continue moving at a significant velocity. This preferred aspect of the invention takes advantage of this by determining that movement has taken place only in response to detecting both acceleration and deceleration within a predetermined interval.

Preferably, measurements of capacitance are made frequently, and digital filtering is applied to these measurements. Because the circuit responds to capacitance changes, rather than absolute values which are subject to large variations due to tolerances, temperature, etc., it can be made highly sensitive by taking high resolution measurements. A particularly convenient way of obtaining high-resolution digital measurements is to use the capacitance to influence the frequency of an oscillator, and then measure that frequency.

Other aspects of the invention, which are preferably combined with aspects mentioned above, are concerned with the structure of the sensor and are intended to provide an arrangement which can be assembled easily, which can be made inexpensively and which is particularly suited for orientation-independent operation. According to a further aspect of the invention, the liquid is disposed between a printed circuit board base layer and a cap affixed to the base layer. The printed circuit board base layer has a conductive layer formed thereon which, together with a conductive part of the cap, forms a capacitor, the capacitance of which varies in response to movement of the liquid. The capacitance will be dependent upon the orientation of the sensor, but the device further comprises a circuit for generating a motion signal in response to a change of the capacitance from that presented in any static orientation.

Such a sensor can be made inexpensively and in a compact form.

The capacitance change can be due to either one or both of two mechanisms, and the sensor is preferably configured to be sensitive to, and enhance the effect of, both mechanisms.

First there is a change due to the inertia or weight of the body of liquid. This bulk effect results in the liquid as a whole adopting a different position relative to the capacitor plates, giving rise to a capacitance change.

To enhance this, the arrangement of the capacitor plates and the volume of liquid are so selected that there is no orientation of the sensor which, when altered slightly, will not give rise to a capacitance change. Thus, the liquid may be capable (when the capacitor plates are vertical) of occupying a region which does not form part of the capacitor, but in this case its volume is sufficient that it cannot occupy a significantly smaller region, so that any movement will cause liquid to move into a position where it affects the capacitance. Similarly, the liquid volume is such that it cannot occupy a significantly larger area than that of the capacitor, when the capacitor plates are vertical.

Preferably, at one side of the liquid there is a capacitance-measuring electrode which extends over approximately half the area which can be covered by the liquid (or a number of electrodes which collectively extend over half the area which can be covered by the liquid). On average, this maximises the degree of capacitance change caused by a given movement of the sensor. For similar reasons, the liquid preferably occupies approximately half the volume in which it is disposed.

A second mechanism relies on the erratic behaviour of the liquid in response to movement of the sensor, giving rise to ripples or splashing. The capacitance changes are thus due to the inertia of small regions of the liquid and are influenced by such factors as surface tension and viscosity. Even if the total volume of liquid between the capacitance plates remains the same, the change of shape of the volume occupied by the liquid will give rise to a capacitance change.

To enhance this, the liquid preferably has a low viscosity and a high dielectric constant.

The two mechanisms may give rise to different response characteristics depending on the type of movement, e.g. whether it is translation or vibration. By suitable selection of filter characteristics and/or physical properties it is possible to make the device distinguish between different types of movement.

The cap may be electrically connected to and/or affixed to a further conductive layer of the printed circuit board base layer. Preferably, the conductive layer which forms the capacitance together with the conductive part of the cap is disposed on the surface of the printed circuit board base layer which faces away from the cap. This makes it easier to avoid contact between the liquid and that conductive layer.

Preferably, the printed circuit board base layer forms part of a multi-layer board, a further surface of the multi-layer board carrying circuit components of the sensor.

Preferably, the sensor has means for permitting adjustment of its sensitivity. For example, the sensor may have switch means permitting adjustment of (a) a threshold which must be exceeded within a predetermined interval for a capacitance change to be registered, (b) the length of the predetermined interval, (c) the number of successive intervals in which a capacitance change must occur in order that movement is determined to have taken place, and/or (d) a delay time between successive predetermined intervals during which readings are taken.

It is also possible to provide for automatic adjustment of sensitivity in dependence upon the capacitance of the sensor, which as indicated above is dependent upon sensor orientation. This would be useful if it is found that the amount of capacitance change in response to a given movement of the sensor is dependent upon sensor orientation.

An arrangement according to the invention will now be described by way of example, with reference to the accompanying drawings, in which:
Figure 1 is a schematic sectional view of a motion sensor in accordance with the invention;
Figures 2A to 2C are plan views showing schematically the layout of printed circuits of the motion sensor;
Figure 3 is a circuit diagram of the sensor;
Figure 4 is a flowchart of the operation of the sensor; and
Figures 5A to 5I show alternative patterns for one of the printed circuit layers of the sensor.

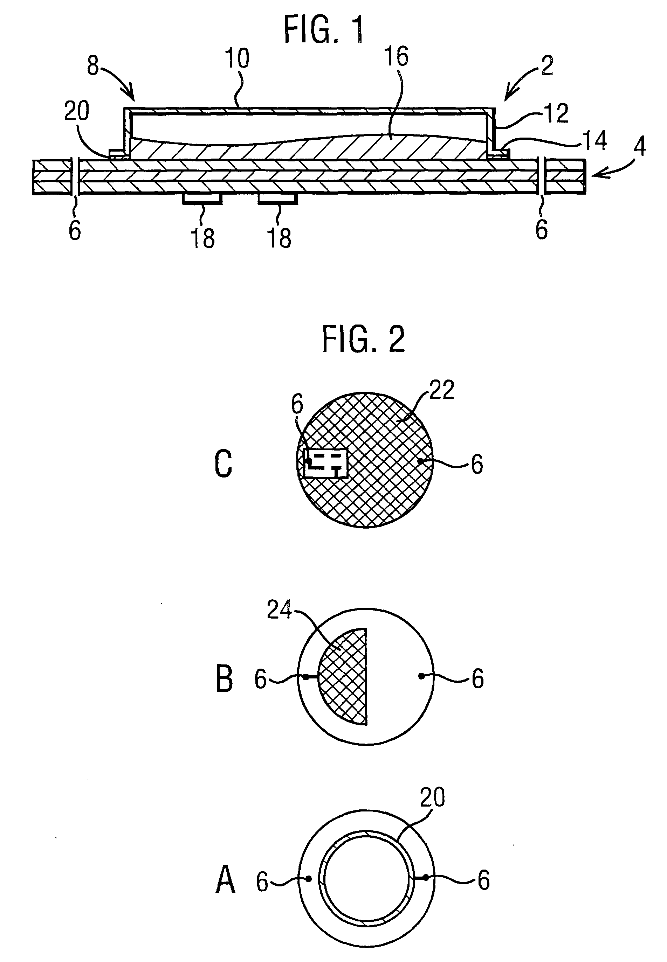

Referring to Figure 1, the motion sensor 2 has a base 4, which is formed of a readily-available multi-layer printed circuit board. The base 4 in this embodiment is formed from a four-layer PCB, i.e. one which has three printed circuit board base layers separating four copper layers each of which can be etched in a desired pattern. However, in this embodiment, only three of the circuit layers are used. Selected parts of the circuit layers can be interconnected by means of through-hole plated vias, such as those illustrated at 6. The base 4 is circular in plan view.

A cap, in this case in the form of a metal can 8, is mounted on top of the base 4. The can 8 is circular in plan view and has a base 10, a cylindrical side wall 12 and, at its open end, and outwardly extending lip 14. After mounting, a dielectric liquid 16 is injected through an aperture (not shown) in the base 4 so as to partially fill (and preferably substantially half-fill) the volume defined between the can 8 and the base 4. The aperture is then sealed.

Circuit components, such as those illustrated schematically at 18, are mounted on the opposite side of the base 4 from the can 8.

Referring additionally to Figures 2A to 2C, these respectively show the etched circuit patterns of the first, second and fourth circuit layers of the multi-layer base 4, counting from the top as seen in Figure 1. The third layer is unused, and could be completely removed during the etching process, or could be left and used as a ground plane.

The first, or top, conductive layer shown in Figure 2A comprises a ring 20 having a size corresponding to that of the lip 14 of the can 8. The can is fixed to the base 4 by soldering the lip 14 to the ring 20. A via 6 connects the ring to a large copper area 22 of the fourth layer shown in Figure 2C, this area forming the ground plane in the present embodiment.

The second conductive layer, shown in Figure 2B, comprises, in this embodiment, a semi-circular area 24 occupying half the area which is covered by the base 10 of the can 8. The area 24 forms, with the base 10, a capacitor having a capacitance value which is dependent upon the dielectric constant of the intervening air and liquid 16 in the can and that of the upper PCB base layer. The liquid is highly dielectric, and therefore the capacitance is influenced significantly by the location of the liquid within the can 8.

The semi-circular area 24 could instead be formed on the top surface of the base 4, but this would mean it would have to be insulated from the liquid, e.g. using a resist, and any small hole would be detrimental to performance.

The semi-circular area 24 is connected to the circuit formed by the fourth conductive layer of Figure 2C by a via 6. In particular, the semi-circular area 24 is connected directly to one of the components 18. (The components' contacts and circuit layout are shown only schematically in Figure 2C.)

In operation, a circuit which is described in more detail below monitors the capacitance of the sensor arrangement. In practice, substantially any movement of the sensor (re-orientation and/or translation) will change the amount or shape of the volume of liquid between the conductive area 24 and the base 10 of the can 8, and thus change the capacitance. The amount of change produced by a given amount of movement is enhanced by using a liquid of low viscosity and high dielectric constant. It has been found that a particularly suitable liquid is ethyl acetoacetate, which has the added advantages that it is non-corrosive and able to stay liquid over a wide range of temperatures (-40 °C to 180 °C).

Consideration of Figures 1 and 2B will indicate that, irrespective of the initial orientation of the sensor, substantially any movement other than vertical movement exactly in the direction of the axis of the sensor arrangement (which is highly unlikely) will result in a change of capacitance. Because the liquid occupies half the volume in which it is contained, and because the area 24 occupies half the maximum area which can be covered by the liquid, the maximum and minimum values of the capacitance are obtained when the sensor is positioned with its axis horizontal and the conductive area 24 positioned at, respectively, the top or bottom. Any change of orientation from either of these two positions will necessarily cause a change in capacitance. These factors also optimize the range over which the capacitance varies.

The circuit described below is arranged to detect any significant change of capacitance and in response thereto to generate a signal representing movement.

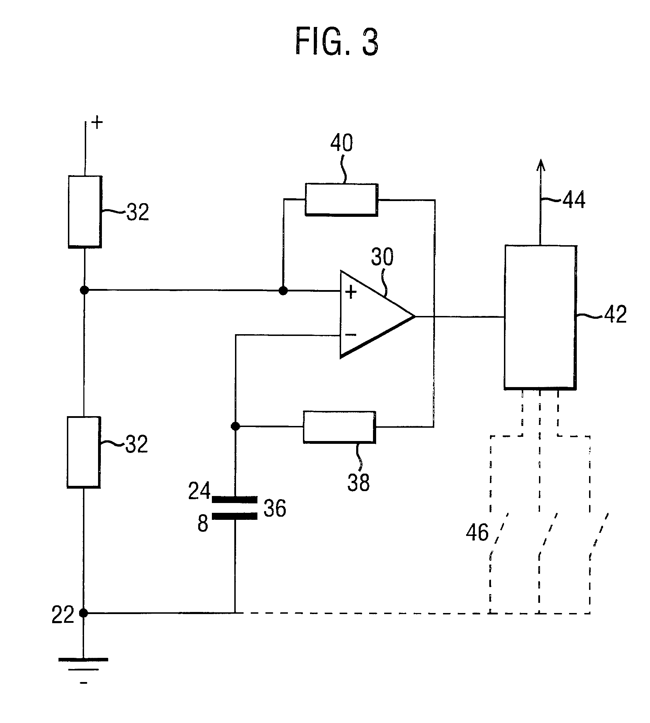

Referring to Figure 3, the circuit components include a comparator 30 having a positive terminal connected to receive a predetermined voltage supplied by the junction between two resistors 32, 34 which are connected in series between a voltage supply terminal and the ground plane 22. The negative terminal of the comparator 30 is connected to the D-shaped circuit area 24 forming one plate of the capacitor 36, the other plate of which is formed by the can 8 which is connected to the ground plane. Two resistors 38, 40 are coupled from the comparator output to its positive and negative terminals, respectively.

This arrangement constitutes a conventional oscillator, the frequency of which is inversely proportional to the capacitance of the capacitor 36. The output pulses from the comparator 30 are provided to an input of a micro-controller 42. This micro-controller can be any of a number of known types, for example Microchip Technology Part no. PIC 12C508, and could also be replaced by discrete components. The function of the micro-controller, which has a built-in clock, is to measure the frequency of the pulses appearing at its input. This is achieved by counting the pulses and determining how many pulses appear in a predetermined interval. If certain criteria are met, as described below, the micro-controller 42 outputs an alarm signal on output line 44.

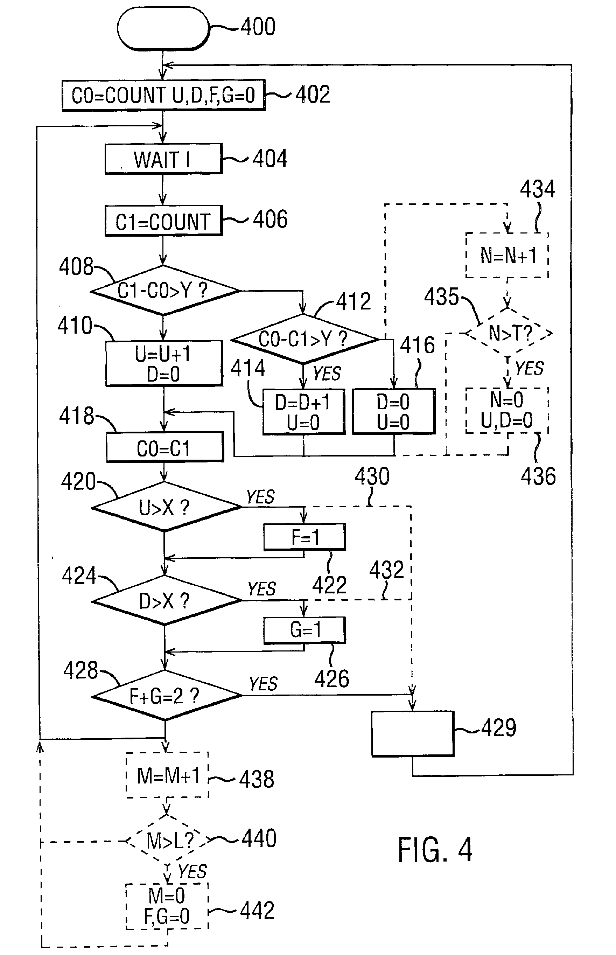

The operation of the motion sensor will now be described with reference to Figure 4, which is a flowchart of the program executed by the micro-controller.

After an initialisation stage 400 following power-up, the program proceeds to step 402 where it counts the pulses at its input for a predetermined period P and sets a variable C0 equal to the count, which is dependent on sensor capacitance. The program also initialises several variables, U, D, F and G, to zero.

Then at step 404 the program waits for a predetermined interval I, following which at step 406 the micro-controller again counts the pulses occurring during an interval P and sets a further variable C1 equal to the value of this count.

At step 408, the program determines whether the count has increased by more than a predetermined value Y. If so, the program proceeds to step 410. Here, the variable U is incremented. U represents the number of consecutive occasions upon which the count value has been found to increase more than the threshold value Y. Another variable, D (see below), is set to zero.

Assuming that at step 408 it is not found that (Cl - C0) is greater than Y, then the program proceeds to step 412. Here it is determined whether the count has decreased by more than the threshold value of Y. If so, then the variable D is incremented and the variable U is set equal to zero. D represents the number of consecutive occasions on which it is found that the count has decreased by more than the threshold value Y.

If the count value has neither increased nor decreased by more than the threshold value Y, the program proceeds to step 416, where the variables U and D are set equal to zero.

At step 418, the previous count C0 is set equal to C1 in preparation for a future check on whether the capacitance value is increasing or decreasing.

At step 420, the program determines whether the variable U is greater than a predetermined value X. If so step 422 is performed. Here, the variable F is set equal to 1.

At step 424, the variable D is compared with the value X. If D is greater than X, step 426 is performed in order to set G = 1.

It will be appreciated from the foregoing that the variable F is set equal to 1 if there have been more than X consecutive occasions upon which the count value has increased by more than the threshold value Y, and G will be set to 1 if there have been more than X consecutive occasions on which the count value has decreased by more than the threshold value Y.

At step 428, the program checks to see whether both the variables F and G have been set equal to 1, i.e. whether F + G = 2. If not, then the program loops back to step 404, following which another monitoring step is performed.

If at step 428 both F and G are found to be set to 1, this means that the capacitance has changed in one sense for a significant amount over a significant period, and then has changed a significant amount over a significant period in the opposite sense. Accordingly, this reliably represents motion and a motion signal is then generated at step 429. The program then loops back to step 402 to reinitialise various variables and recommence monitoring.

In the arrangement described above, a motion signal is provided only if significant changes in opposite senses are detected. However, in another embodiment, the arrangement may be such that a motion signal is generated in response to only a significant increase or a significant decrease of the measured capacitance. This is represented in Figure 4 by the broken-line paths 430 and 432; in such an arrangement, of course the steps 422, 426 and 428 will no longer be required.

The value Y could be a constant, but is preferably proportional to the oscillator frequency C0 (or C1). This provides the sensor with a self-calibration feature, whereby the sensitivity remains substantially constant irrespective of orientation, temperature, etc.

In the described arrangement, in order for a capacitance change to be detected, there have to be significant changes in the measured value on consecutive occasions. This could be modified. For example, if X is set equal to zero there needs to be only a single change exceeding the threshold Y to set F or G equal to 1 (or to trigger a motion signal).

Even if X is greater than zero, the arrangement could be modified so that triggering of the motion signal does not require that the capacitance changes occur in consecutive intervals. This could be achieved by replacing step 416 by steps 434, 435 and 436, shown in broken lines. In this modification, the variables U and D are only set to zero if a count value N exceeds a threshold value T. This count value is incremented each time it is found that the count value has not changed by more than Y, and is reset each time the count value exceeds the threshold T, and (at steps 410 and 414) each time the count value changes significantly. Accordingly, the motion signal can be generated in response to a number of significant capacitance changes even when they are not consecutive, so long as the number of consecutive times on which no significant changes are detected does not exceed a threshold T.

In the described arrangement in which the motion signal is generated only in response to significant changes in opposite senses (detected at step 428), the program allows for the possibility of an indefinite interval between the two opposite-sense changes and still generates the motion signal. If desired, this could be modified so that both changes have to occur in a predetermined interval. This could be achieved for example by including steps 438, 440 and 442 after a "No" decision at step 428.

At step 438, a counter M (which is set to zero at steps 422 and 426) is incremented. At step 440, the counter M is checked against a threshold L. If M>L then, at step 442, F and G are set to zero. Therefore, the motion signal is inhibited if there is a too long a delay between the opposite-sense changes.

It will be noted that each of these techniques involves taking a succession of digital readings, and then applying a digital filtering technique in order to determine whether movement has occurred. Digital filters having other characteristics could alternatively be used. The characteristics can be selected so as to discriminate between different types of movement, such as translational and vibrational movements. A movement indication signal may be provided only if the correct type of movement is detected. For example, if it is desired to provide a signal in response to translational or rotational movement, but not vibrational movement of low amplitude, the filter can be arranged such that the signal is generated only if the oscillator frequency changes in the same sense successively multiple times (preferably followed by multiple successive changes in the opposite sense). If it is desired to detect low-amplitude vibration but not translation, the filter can be arranged such that the signal is generated only if the oscillator frequency changes in opposite senses multiple times, each change lasting for no longer than a predetermined number of monitoring intervals.

The motion signal produced at step 429 could be used to trigger the alarm signal generated on the output line 44. However, in another embodiment suited for the PASS field, the microcontroller 42 is operable to generate the alarm signal in response to determining that no motion signal has occurred within a predetermined interval, so that the alarm signal is representative of the absence of motion.

Referring again to Figure 3, the microcontroller 42 may have further inputs connected to switches, such as those indicated in broken lines at 46, which permit adjustment of the sensitivity of the sensor. This could be achieved by varying one or more of the parameters I, Y, X, T and L mentioned above. Switches may also be used to switch the mode of the operation (for example to cause the software to operate using one or more of the flow paths indicated in broken lines in Figure 4).

In a further embodiment of the invention, the sensitivity of the sensor is automatically adjusted in response to the current orientation of the device. This could be achieved quite simply by making one or more of the sensitivity parameters, for example I, Y, X, T and L, a function of C1 or C0.

Even if there is no provision for adjustment of sensitivity, it would be easy to manufacture devices which are similar to each other except with regard to their sensitivity, simply by making appropriate software changes to adjust the relevant parameters. Similarly, software changes could be used to adjust the digital filter characteristics to make sensors responsive to different types of movements.

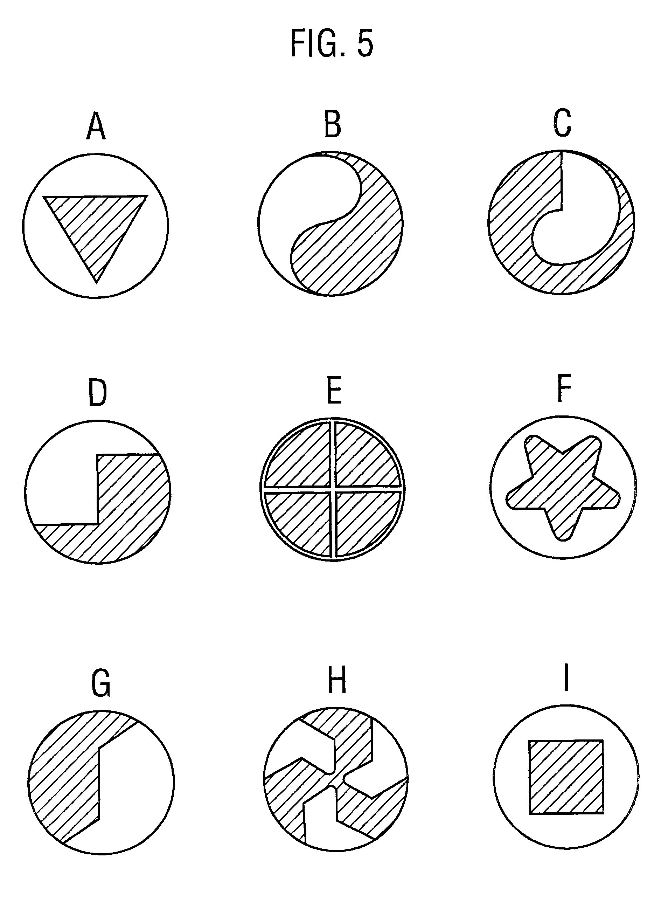

Referring to Figure 5, this shows a number of alternative configurations of the printed circuit layer 24. The configurations shown in Figures 5B, C, D, F, G and H each comprises a conductive area in a respective shape occupying about half the area covered by the cap 8. Each has advantages similar to those of the D-shaped area of Figures 1 and 2. In each case, any significant movement of the sensor will result in a change in the volume or configuration of the liquid covering the conductive area. This can be considered more readily by considering the following two situations. First, assuming that the axis of the sensor is arranged to be vertical, then the liquid will cover the whole of the area covered by the cap. Any movement in a horizontal direction will tend to cause the thickness of the liquid to diminish at the leading side of the sensor and increase at the trailing side. This change will result in a change of capacitance. If, on the other hand, the axis is horizontal, then with the sensor stationary the liquid will lie in a trough, with its upper surface extending along a diameter of the cap. Any horizontal motion transverse to the axis will tend to cause the liquid to ride up the trailing side of the sensor. This is equivalent to the effect which would occur if the liquid were to be stationary and the sensor were to be rotated about its axis. In the arrangements described above, this will result in a change in the amount of the conductive area which is covered by the liquid, and hence a change in capacitance.

In general, a preferred arrangement of the conductive layer 24 is one in which, with the capacitor plates vertical, the conductive area lying below the surface level of the liquid substantially continuously varies as the sensor is rotated about an axis normal to the capacitor plates.

The arrangement shown in Figure 5E comprises four conductive areas arranged in quadrants which collectively cover the whole of the area covered by the cap. In this arrangement, each conductive area would be separately monitored, by having separate oscillators or a single oscillator which is connected in turn to each of the conductive areas. This could be used to provide a more specific indication of current sensor orientation. It will, however, be noted that the motion-detecting operation of the sensor requires only a single conductive area, and the preferred embodiments include only one area.

With regard to Figures 5A and I, these arrangements also have a single conductive area occupying about half the area under the cap, the areas in this case comprising a central triangle or square. In these arrangements, assuming the axis of the device to be horizontal and the liquid to occupy approximately half the volume in the cap, it would be expected that rotation of the device about its axis would not result in significant capacitance changes. However, it has been found somewhat surprisingly that noticeable capacitance changes occur. This is due to the second mechanism mentioned above, i.e. the erratic motion, such as splashing, which occurs in a low-viscosity liquid in a moving container, in combination with the circuit arrangement which permits frequent, high-resolution capacitance readings. The conductive area arrangements of Figures 5A and 5I, in combination with suitable digital filtering characteristics, may be particularly appropriate for detecting vibrational movement.

The effect of this mechanism is however valuable in other embodiments of the invention. A preferred liquid for enhancing the effect is ethyl acetoacetate, which has at room temperature (25°C) a viscosity of approximately 1.5 mN.Sm⁻² and a dielectric constant of approximately 14.0. It is felt that similar advantages could be achieved by use of other liquids with a viscosity below 2 and a dielectric constant over 10. Some alcohols may be suitable, although they are less preferred because of their low boiling point.

Various modifications to the arrangements shown above may be made. For example, although it is preferred that the cap be made of conductive material, this is not essential so long as it has a conductive part which forms one of the capacitor plates. This could extend over only part of the area of the cap, in which case the conductive area 24 may extend over the whole cap area.

The microcontroller 42 may be arranged to generate on line 44 a signal which adopts either one of two states, each represented by a particular code or voltage, in dependence upon whether movement has been detected. Neither state would be indicated by the absence of voltage, so that it would be possible to detect a circumstance in which a fault, such as a broken connection, has occurred. The microcontroller 42 may also be arranged to monitor the absolute value of the capacitance (in those arrangements in which the conductive area 24 is always at least partially covered) and provide an indication of a fault if the capacitance changes to a value indicating that the liquid may have leaked.

Although the arrangements of the invention are not substantially affected by temperature, there may be an influence on sensitivity as a result of changes of, for example, the viscosity of the liquid or its dielectric constant, so in some circumstances it may be desirable to include a temperature sensor, and make the microcontroller 42 responsive to the output of this sensor for adjusting sensitivity.

## Claims

1. A motion sensor device comprising a dielectric liquid between conductors and arranged such that movement of the liquid causes a change in capacitance between the conductors, and a circuit which is operable to generate a signal indicative of movement in response to a capacitance change exceeding a predetermined threshold occurring within a predetermined interval.

2. A motion sensor device comprising a sensor formed of a printed circuit board and cap mounted thereon so as to form an enclosed volume which is partially filled with a dielectric liquid, the printed circuit board having a conductive layer which, together with a conductive part of the cap, forms a capacitor, the capacitance of which varies in response to movement of the liquid, the capacitance being dependent upon the orientation of the sensor, the device further comprising a circuit for generating a movement-indicating signal in response to a change of the capacitance from that presented in any static orientation.

3. A motion sensor device as claimed in claim 2, wherein the printed circuit board comprises a base layer carrying the conductive layer on an opposite side thereof from the cap.

4. A motion sensor device as claimed in claim 3, wherein the base layer has a further conductive layer on the same side thereof as the cap, the conductive part of the cap being electrically connected to the further conductive layer.

5. A motion sensor device as claimed in any one of claims 2 to 4, wherein the printed circuit board is a multi-layer PCB structure which has a further conductive layer carrying components of the circuit.

6. A motion sensor device as claimed in any preceding claim, including filtering means responsive to the capacitance changes for producing the movement-indicating signal only if the capacitance changes according to a predetermined criterion.

7. A motion sensor device as claimed in any preceding claim, wherein the circuit is arranged to acquire digital values representing successive capacitance readings, and to apply digital filtering to the values so as to produce the movement-indicating signal if the changes in the values meet a predetermined criterion.

8. A motion sensor as claimed in any preceding claim, wherein the circuit comprises an oscillator having a frequency influenced by said capacitance, and means for measuring the frequency.

9. A motion sensor device as claimed in any preceding claim, wherein the movement-indicating signal is generated in response to capacitance changes in opposite senses.

10. A motion sensor device as claimed in any preceding claim, wherein the movement-indicating signal is generated in response to capacitance changes detected in multiple separated monitoring periods.

11. A motion sensor device as claimed in any preceding claim, wherein a conductor of the capacitor at one side of the liquid extends over only a part of the area of the volume in which the liquid is confined.

12. A motion sensor device as claimed in claim 11, wherein, with the capacitor conductors vertical, the liquid and conductor areas are so arranged that rotation of the device about an axis normal to the conductors causes the capacitance to change throughout a complete revolution.
